# FASCICULE DE BREVET EUROPEEN

(11) **EP 1 937 983 B1**
(45) Date de publication et mention de la délivrance du brevet: **01.04.2009**
(21) Numéro de dépôt: 06820328.0
(22) Date de dépôt: 20.10.2006
(51) Int. Cl.: F15B 13/04, G05D 16/10

(54) **VALVE A OUVERTURE AMORTIE**
VENTIL MIT GEDÄMPFTEM ÖFFNUNGSSYSTEM
VALVE WITH CUSHIONED OPENING SYSTEM

(30) Priorité: 20.10.2005 FR 0510701
(43) Date de publication de la demande: 02.07.2008
(73) Titulaire: POCLAIN HYDRAULICS INDUSTRIE, 60411 Verberie (FR)
(72) Inventeur: COSTAZ, Dominique, F-60290 Neuilly Sous Clermont (FR); MANGANO, Alain, F-60350 Vieux Moulin (FR)
(74) Mandataire: Intes, Didier Gérard André
(86) Numéro de dépôt international: PCT/FR2006/051072
(87) Numéro de publication internationale: WO 2007/045803

(56) Documents cités:
- EP-A- 0 638 746
- EP-A- 0 816 729
- WO-A-03/056220
- DE-A1- 4 033 301
- DE-A1- 4 221 213

## Description

La présente invention concerne une valve à ouverture amortie, comprenant un corps de valve, avec une voie d'entrée et une voie de sortie, une tige de soupape apte à se déplacer entre une position fermée dans laquelle ladite tige coopère avec un siège de soupape pour isoler les voies d'entrée et de sortie et une position ouverte dans laquelle la tige est écartée du siège pour mettre les voies d'entrée et de sortie en communication, la valve comprenant une chambre de commande d'ouverture pour la tige de soupape apte à être alimentée en fluide pour solliciter la tige de soupape vers sa position ouverte, un ressort de rappel pour solliciter la tige de soupape vers sa position fermée, un piston apte à coulisser dans le corps selon un déplacement de fermeture pour solliciter un contact entre la tige de soupape et le siège, et des moyens de commande hydraulique du déplacement du piston comprenant un dispositif de limitation du débit pour différer le déplacement de fermeture du piston par rapport au déplacement de la tige de soupape vers sa position ouverte.

L'invention s'applique en particulier à une valve utilisée comme limiteur de pression, c'est-à-dire qui, lorsque la pression à la voie d'entrée atteint une pression limite déterminée, s'ouvre pour relier la voie d'entrée à la voie de sortie et limiter ainsi la pression dans la conduite reliée à la voie d'entrée. En particulier, un tel limiteur de pression est utilisé dans le circuit hydraulique d'alimentation d'un moteur hydraulique, en étant relié aux conduites principales d'alimentation et d'échappement de ce moteur, pour limiter la pression dans ces dernières.

Plus précisément, la valve selon l'invention est en particulier une valve de limitation de pression utilisée dans le circuit hydraulique d'alimentation d'un moteur hydraulique destinée à entraîner une masse d'inertie importante. En effet, dans un tel cas, il existe un risque accru de montée en pression brutale dans la conduite principale d'alimentation lors du démarrage du moteur, et de montée en pression brutale dans la conduite d'échappement lors du freinage du moteur. Ces montées en pression sont dues à l'inertie de la masse qui est entraînée.

Les valves de limitation de pression classiques présentent l'inconvénient de générer des à-coups importants, du fait de ces montées en pression brutales. En effet, le temps de réponse d'une valve est en général tel que celle-ci s'ouvre alors que le seuil de pression à la voie d'entrée de la valve a déjà été dépassé. L'ouverture de la valve provoque alors une chute brutale de la pression à la voie d'entrée pour la ramener à la pression cible de limitation, et donc un à-coup désagréable.

Pour remédier à ces inconvénients des valves classiques, DE 40 33 301 divulgue une valve de limitation de pression à ouverture amortie du type cité en préambule. En effet, cette valve s'ouvre à partir d'un premier seuil intermédiaire inférieur au tarage nominal correspondant à la limitation de pression cible, et permet ensuite une montée progressive de la pression à la voie d'entrée, jusqu'à la pression nominale de tarage. Plus précisément, dans cette valve connue, la tige de soupape peut être écartée de son siège fixe pour ouvrir la valve dès que la pression à la voie d'entrée atteint une valeur intermédiaire correspondant au tarage initial du ressort de rappel de cette tige de soupape. Le piston est disposé autour de la tige de soupape et est en appui sur l'extrémité arrière du ressort, de sorte que ce piston, lorsqu'il est déplacé, augmente les efforts de rappel exercés par le ressort sur la tige de soupape, pour rappeler cette dernière contre son siège. Le déplacement du piston est commandé par l'alimentation en fluide d'une chambre de commande, située à l'arrière du ressort, et reliée à la voie d'entrée par le centre de la tige de soupape, par l'intermédiaire d'une restriction. Le déplacement du piston dans le sens comprimant le ressort ne peut s'opérer qu'au prix de la vidange d'une chambre d'amortissement, cette vidange étant ralentie dans la mesure où elle est réalisée par les passages restreints. Cette particularité permet de retarder le déplacement du piston pour qu'il intervienne après l'ouverture de la valve due au déplacement de la tige de soupape.

Lorsque la pression augmente à la voie d'entrée, à partir de la pression de tarage du ressort, plusieurs cycles se produisent pendant lesquels la soupape est tour à tour écartée de son siège en étant déplacée dans une première direction sous l'effet de la pression et rappelée en direction inverse pour venir à nouveau buter contre son siège, sous l'effet de rappel conjugué du piston et du ressort. Ces cycles se réalisent successivement jusqu'à ce que le piston vienne en butée contre un étagement du corps de soupape, position dans laquelle la compression du ressort correspond au tarage nominal de la valve de limitation de pression, de sorte que la valve reste normalement ouverte tant que la pression à sa voie d'entrée est au moins égale à cette pression nominale de tarage.

La valve de DE 40 33 301 présente l'inconvénient d'avoir une structure complexe notamment parce que, pour commander le déplacement du piston qui lui-même provoque la compression additionnelle du ressort de rappel de la tige de soupape, il faut réaliser dans le corps de valve plusieurs passages de dimensions précises, pour l'alimentation de la chambre de commande et la vidange de la chambre d'amortissement. La longueur de ces passages est significative puisque les chambres de commande et d'amortissement du piston sont situées en arrière du ressort, dans des positions éloignées de la voie d'entrée, qui alimentent ces chambres.

EP 0 638 746 divulgue une valve du type cité en préambule, dans laquelle, en outre, le siège de soupape est formé sur le piston, ce dernier présentant un alésage dans lequel est disposée coulissante la tige de soupape.

Dans EP 0 638 746, l'alimentation en fluide de la chambre de commande du déplacement de fermeture du piston est limitée par une restriction. Ceci permet effectivement de différer le déplacement de fermeture du piston mais, dans la mesure où cette restriction limite également l'évacuation du fluide hors de cette chambre et où cette évacuation est nécessaire au réarmement de la valve, la restriction ralentit ce réarmement, de sorte que la valve n'est pas rapidement opérationnelle.

La présente invention vise à améliorer cet état de la technique en proposant une valve à ouverture amortie, pouvant notamment être utilisée comme limiteur de pression, ayant une structure plus simple et plus compacte, et permettant un réarmement plus rapide.

Au sens de la présente invention, le fait que l'ouverture est amortie signifie qu'avant une ouverture totale de la valve, celle-ci est partiellement ouverte de manière à maîtriser dans le temps, la perte de charge entre les voies d'entrée et de sortie, sans faire brutalement diminuer cette perte de charge. En d'autres termes, la diminution de la perte de charge est amortie.

Ce but est atteint grâce au fait que les moyens de commande hydraulique du déplacement du piston comprennent une chambre d'amortissement disposée de telle sorte que du fluide doit s'évacuer hors de ladite chambre d'amortissement pour permettre un déplacement de fermeture du piston, cette évacuation étant opérée par l'intermédiaire du dispositif de limitation du débit qui est disposé entre la chambre d'amortissement et la voie de sortie.

Selon l'invention, le siège de soupape est mobile. Ainsi, lorsque la pression dans la chambre de commande d'ouverture pour la tige de soupape atteint la valeur de tarage du ressort de rappel de cette tige, celle-ci s'écarte dans un premier temps de son siège pour permettre l'ouverture de la valve. Toutefois, grâce à ses moyens de commande hydrauliques, le piston peut alors se déplacer de telle sorte que le siège "rattrape" la tige de soupape pour refermer la valve. Si la pression continue à augmenter dans la chambre de commande d'ouverture pour la tige de soupape, celle-ci s'écarte à nouveau de son siège, puis ce dernier "rattrape" à nouveau la tige de soupape.

L'invention reprend donc le principe ouverture/fermeture de la valve selon des cycles jusqu'à son ouverture maximale, pour rendre cette ouverture progressive. Toutefois, contrairement à DE 40 33 301, le siège de la soupape est mobile, et c'est ce siège qui se déplace pour rattraper la tige de soupape et refermer la valve à la fin de chaque cycle. Ainsi, la tige de soupape n'est pas en elle-même animée de mouvements de va-et-vient pour alternativement ouvrir et refermer la valve lors de chaque cycle, mais elle se déplace toujours dans le même sens, et est rattrapée par le siège qui se déplace également dans le même sens. Le fonctionnement est donc plus simple que dans DE 40 33 301, ce qui permet de limiter la durée des cycles d'ouverture/fermeture puisqu'il n'est pas nécessaire, au sein de chaque cycle, d'inverser le déplacement de la tige de soupape. Ainsi, l'amortissement est rendu plus progressif que dans DE 40 33 301. De plus, le piston sur lequel est formé le siège de la soupape n'agit pas directement sur le ressort de tarage. Ses moyens de commande hydraulique peuvent être extrêmement simples, et situés au voisinage de la voie d'entrée, sans nécessité des usinages complexes.

Selon l'invention, l'amortissement du déplacement de fermeture du piston est réalisé sans pénaliser le réarmement de la valve. En effet, après un cycle de fonctionnement, le piston peut revenir très rapidement à sa position de repos, contrairement à EP 0 638 746 où le retour à une telle position nécessite l'évacuation, par une restriction, du fluide contenu dans la chambre de commande de fermeture du piston.

En particulier, le dispositif de limitation du débit sert à limiter la circulation de fluide dans le sens de la vidange de cette chambre, nécessaire au déplacement de fermeture du piston.

Le dispositif de limitation du débit peut être de tout type connu, en particulier une restriction, un gicleur ou un régulateur de débit.

Avantageusement, la chambre de commande d'ouverture pour la tige de soupape est ménagée dans le piston et les moyens de commande hydraulique du déplacement du piston comprennent une chambre de commande de fermeture pour le piston qui communique avec ladite chambre de commande d'ouverture pour la tige de soupape par l'intérieur de la valve.

Grâce à ces dispositions, c'est la même source de fluide qui alimente la chambre de commande d'ouverture pour la tige de soupape et la chambre de commande de fermeture pour le piston. Les sections d'alimentation de ces chambres et les sections respectives de poussée du fluide sur la tige de soupape et sur le piston peuvent être telles que la tige de soupape se déplace plus rapidement que ce piston, pour ouvrir la valve avant que le piston n'ait pu rattraper cette tige pour la refermer.

Avantageusement, la chambre de commande d'ouverture pour la tige de soupape communique avec la voie d'entrée.

Dans ce cas, la valve à ouverture amortie est en particulier utilisée comme limiteur de pression.

Avantageusement, le piston présente au moins une fenêtre disposée entre l'alésage et une partie périphérique du piston qui est située dans un espace communiquant avec la voie d'entrée et la tige de soupape présente une portée axiale apte à coopérer avec une portion de guidage de l'alésage située entre la chambre de commande d'ouverture pour la tige de soupape et ladite fenêtre, un jeu ménagé entre ladite portée axiale et ladite portion de guidage permettant la communication entre la chambre de commande d'ouverture pour la tige de soupape et ledit espace.

Cet espace peut être la chambre de commande de fermeture pour le piston. Selon une variante, l'alésage du piston est étagé et présente une partie de plus petit diamètre, délimitée par la tige de soupape dans laquelle est formée la chambre de commande d'ouverture pour ladite tige, ainsi qu'une partie de plus grand diamètre, éloignée de la tige de soupape et dans laquelle est formée la chambre de commande de fermeture pour le piston.

L'invention sera bien comprise et ses avantages apparaîtront mieux à la lecture de la description détaillée qui suit, d'un mode de réalisation représenté à titre d'exemple non limitatif sur les dessins annexés, sur lesquels:
- la figure 1 montre un exemple de circuit pouvant utiliser deux valves conformes à l'invention comme limiteurs de pression ;
- la figure 2 est une vue en coupe axiale d'une valve selon l'invention ;
- la figure 3 est un agrandissement de la zone III de la figure 2 ;
- la figure 4 est un agrandissement de la zone IV de la figure 2 ; et
- la figure 5 est une vue analogue à celle de la figure 2, pour une variante de l'invention.

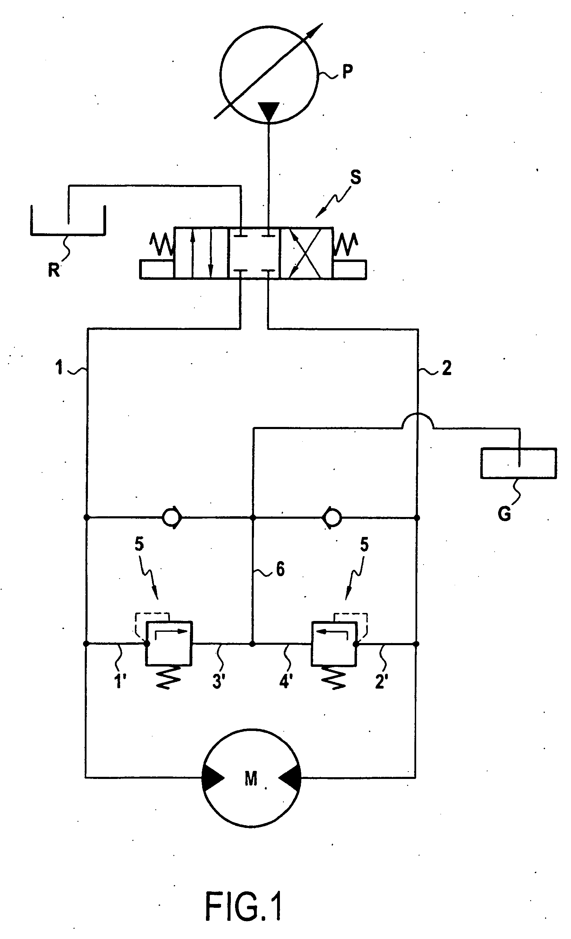

Le circuit de la figure 1 comprend une pompe P, pour l'alimentation en fluide d'un moteur hydraulique M, par deux conduites principales 1, 2 qui servent respectivement à l'alimentation et à l'échappement en fonction de la position d'un sélecteur S. Bien qu'on ait représenté un circuit ouvert (la conduite d'échappement étant reliée à un réservoir R à la pression atmosphérique ou à très faible pression) un circuit fermé est également envisageable. Deux limiteurs de pression classiques 5 servent à limiter la pression dans la conduite principale d'alimentation. Leurs voies d'entrées respectives, 1' et 2', sont respectivement reliées aux conduites 1 et 2, tandis que leurs voies de sorties respectives, 3' et 4', sont reliées à des moyens de gavage G par une conduite 6.

Selon une variante classique, les limiteurs de pression 5 peuvent avoir leurs voies d'entrée respectives reliées respectivement aux conduites 1 et 2 tandis que leurs voies de sortie respectives sont reliées respectivement aux conduites 2 et 1.

Il s'agit de montages classiques pour lesquels deux valves selon l'invention peuvent avantageusement remplacer les limiteurs de pression 5.

La valve de l'invention peut également être utilisée comme limiteur de pression pour un circuit du type décrit dans la demande de brevet français n° 04 07910 (non publiée à la date de priorité de la présente demande), en étant reliée à un sélecteur qui, selon sa position, permet de raccorder à l'entrée de cette valve celle des conduites principales du circuit qui est à la plus haute pression.

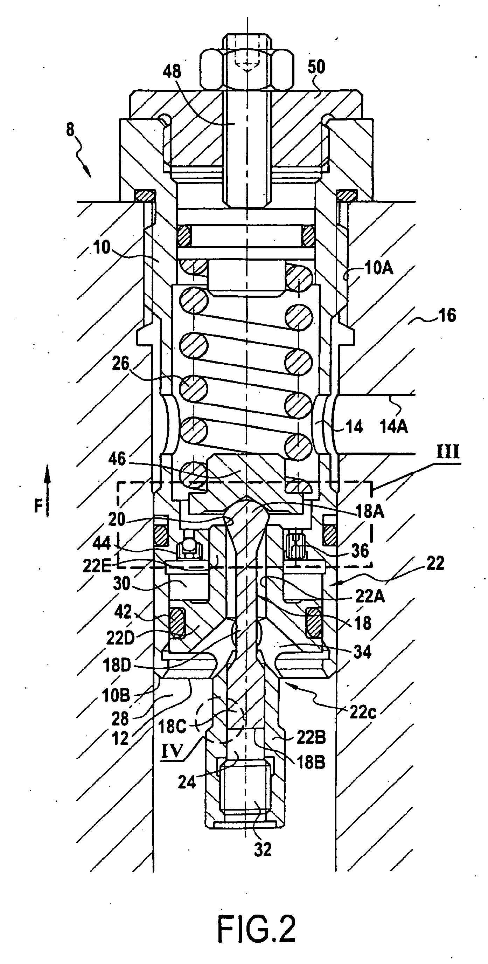

La valve 8 représentée sur la figure 2 comporte un corps de valve 10 ayant une voie d'entrée 12 et une voie de sortie 14.

En l'espèce, ce corps de valve peut être fixé, par exemple par vissage grâce à une portée cylindrique filetée 10A qu'il présente, dans un élément 16 tel qu'une partie du carter d'un moteur hydraulique. La voie d'entrée 12 est en l'espèce formée à l'extrémité 10B du corps de valve qui est située à l'intérieur de cet élément 16, tandis que la voie de sortie 14 communique avec un perçage 14A de l'élément 16.

La valve comporte une tige de soupape 18 mobile et un siège de soupape 20, qui est formé à l'extrémité d'un piston 22 et qui est donc également mobile.

La valve comprend une chambre de commande d'ouverture 24 pour la tige de soupape qui, lorsqu'elle est alimentée en fluide, sollicite un déplacement de la tige de soupape dans la direction F, c'est-à-dire vers sa position ouverte dans laquelle elle est écartée du siège 20. Un ressort de rappel 26 est disposé dans le corps de valve, pour avoir un effet antagoniste de celui de l'alimentation en fluide de la chambre 24, en tendant à déplacer la tige de soupape en sens inverse du sens F, pour la rappeler vers sa position fermée, contre le siège.

Comme indiqué précédemment, le siège de soupape est formé sur le piston 22, à une extrémité de ce dernier. Plus précisément, la tige de soupape est engagée dans un alésage 22A que présente le piston, et cette tige présente une tête élargie 18A qui porte contre le bord de l'alésage 22A, formant le siège 20, pour refermer la valve lorsque la tige de soupape est déplacée dans le sens inverse du sens F par rapport au piston ou lorsque le piston est déplacé dans le sens F par rapport à la tige de soupape.

Le déplacement du piston 22 est commandé par des moyens de commande hydraulique. Dans l'exemple représenté, ces moyens de commande comprennent une chambre de commande de fermeture 28 pour le piston, qui est en l'espèce réalisée directement à l'extrémité 10B du corps 10 située en communication avec la voie d'entrée 12. En effet, cette extrémité 10B est ouverte et l'on voit que le piston passe à travers ladite extrémité.

Ces moyens de commande hydraulique comprennent également une chambre d'amortissement 30, dont on précisera la conformation dans la suite.

La chambre de commande d'ouverture 24 pour la tige de soupape est ménagée dans le piston et communique avec un espace 28 qui, lui-même, communique avec la voie d'entrée 12. En l'espèce, cet espace 28 est la chambre de commande de fermeture 28 pour le piston. Plus précisément, le piston présente une queue 22B, située à son extrémité opposée au siège 20. L'alésage 22A traverse le piston de part en part et la chambre 24 est ménagée dans un tronçon de cet alésage qui s'étend entre un bouchon 32 de fermeture et l'extrémité arrière 18B de la tige de soupape 18, opposée à sa tête élargie 18A.

L'alimentation en fluide de la chambre de commande d'ouverture 24 pour la tige de soupape est réalisée comme suit. Le piston présente au moins une fenêtre 34 (deux fenêtres en l'espèce) qui est disposée entre l'alésage 22A et une partie périphérique 22C de ce piston qui est située dans la chambre de commande 28. En l'espèce, cette partie périphérique 22C est ménagée, sur la périphérie externe du piston, entre sa portion de contact 22D qui coopère avec la périphérie interne du corps de valve 10, et sa queue 22B.

De son côté, la tige de soupape 18 présente une portée axiale 18C qui coopère avec une portion de guidage de l'alésage 22A, située entre la chambre de commande 24 et la fenêtre 34.

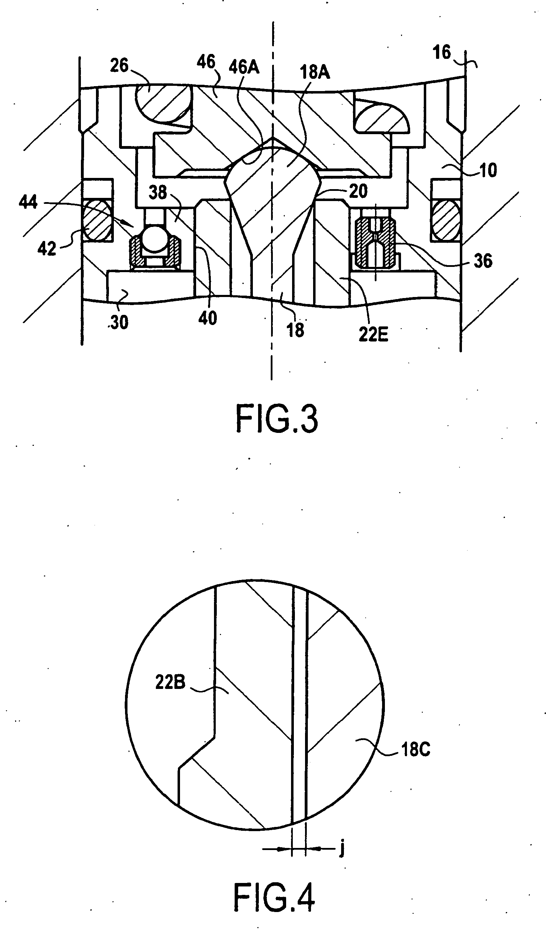

Comme on le voit sur le détail de la figure 4, un jeu j est ménagé entre cette portée axiale et cette portion de guidage, ce qui permet la communication entre la chambre 24 et la chambre 28.

Le jeu j peut être réalisé simplement par un léger sous-dimensionnement du diamètre de la portée axiale 18C par rapport à celui de la portion de guidage de l'alésage 22A. La communication entre la chambre de commande 28 pour le piston et la chambre de commande 24 d'ouverture pour la tige de soupape peut être réalisée par tout autre moyen approprié (stries ou cannelures axiales sur la portée axiale 18C pour faire communiquer la fenêtre 34 et la chambre 24 ou suppression du bouchon 32 de manière à permettre une alimentation et une vidange aisées de cette chambre 24). Cependant la réalisation représentée présente l'avantage d'éviter les vibrations.

On relève que, entre la portée axiale 18C et la tête 18A, la tige de soupape présente une portion de cou 18D légèrement plus étroite, pour favoriser le passage non restreint de fluide entre la voie d'entrée 12 et la voie de sortie 14 de la valve lorsque la tête 18A est écartée du siège. Les stries ou cannelures précédemment évoquées s'étendent, lorsqu'elles sont présentent, sur l'intégralité de la portée axiale, entre ce cou 18D et l'extrémité arrière 18B de la tige 18.

Les dimensions respectives de la tige de soupape 18 et du piston 22 (notamment en ce qui concerne leurs surfaces respectivement exposées au fluide contenu dans les chambres 24 et 28 et le jeu j précité), et le tarage du ressort 26 sont déterminés de telle sorte que lorsque la pression augmente à la voie d'entrée 12, et donc dans les chambres 28 et 24, la tige de soupape réagit très rapidement à cette augmentation de pression se déplaçant dans le sens F, avant le déplacement du piston 122 dans le même sens.

La présence de la chambre d'amortissement 30 favorise ce séquençage des déplacements relatifs de la tige de soupape 18 et du piston 22. En effet, pour permettre le déplacement du piston dans le sens F, il faut que du fluide s'évacue hors de la chambre 30, cette évacuation étant opérée par l'intermédiaire d'une restriction 36 qui fait office de dispositif de limitation du débit.

Plus précisément, comme on le voit mieux sur la figure 3, le corps de valve 10 présente une paroi annulaire interne 38 ayant un perçage 40 dans lequel est engagée une extension axiale 22E du piston, qui porte le siège de soupape 20 à son extrémité libre. La portion de contact 22D du piston coopère quant à elle avec la périphérie interne du corps de valve 10 du côté de cette paroi annulaire interne 38 qui est opposé à la voie de sortie 14. La chambre d'amortissement 30 est ménagée entre cette paroi annulaire interne et cette portion 22D du piston. La restriction 36 est disposée entre la chambre d'amortissement 30 et la voie de sortie 14 et, plus précisément, dans la paroi annulaire interne 38 qui présente à cet effet un perçage additionnel approprié.

Comme on le voit sur la figure 2, la portion 22D du piston est équipée d'un joint d'étanchéité 42 qui assure un contact étanche entre la périphérie externe de ce piston et la périphérie interne du corps de valve 10.

La chambre d'amortissement 30 est donc située à l'avant de la portion 22D du piston dans son sens de déplacement F. Il faut noter que l'extension axiale 22E précitée contribue au guidage du déplacement du piston en coopérant avec la paroi du perçage 40 dans lequel elle s'étend.

Si l'on considère le piston depuis son siège 20 jusqu'à son extrémité opposée, on constate qu'il comporte successivement l'extension axiale 22E, la portion 22D de diamètre augmenté formant un flasque, et la portion de queue 22B. Les fenêtres 34 s'étendent entre la portion 22D et cette portion de queue 22B.

La valve comporte un clapet anti-retour 44, mieux visible sur la figure 3, qui autorise une circulation de fluide sensiblement non restreinte entre la voie de sortie 14 et la chambre d'amortissement 30, dans le sens de l'alimentation en fluide de cette chambre. En l'espèce, ce clapet anti-retour est disposé dans la paroi annulaire interne 38 qui présente à cet effet un perçage additionnel approprié. Ainsi, la circulation du fluide dans le sens sortant de la chambre 30 est limitée par la restriction 36, tandis que l'alimentation en fluide de cette chambre est sensiblement libre.

Le fonctionnement de la valve est décrit ci-après.

Lorsque la pression augmente dans la chambre 28 et dans la chambre 24, jusqu'à ce que la pression dans la chambre 24 atteigne le tarage du ressort 26, la tige de soupape 18 est déplacée dans le sens F pour ouvrir la valve. Toutefois, du fluide s'échappant de la chambre d'amortissement 30 de manière restreinte, le piston 22 peut ensuite se déplacer également dans le sens F pour rattraper la tête 18A de la tige de soupape 18 et refermer la valve. Si la pression continue à augmenter dans les chambres 28 et 24, la tige de soupape se déplace à nouveau dans le sens F pour ouvrir la valve, et celle-ci a été ensuite refermée par un déplacement du piston consécutif à l'évacuation de fluide hors de la chambre 30. Ces déplacements successifs peuvent se poursuivre jusqu'à ce que le piston ait atteint sa position maximum, dans laquelle il vient en butée contre la paroi annulaire 38.

Lorsque la valve est ainsi complètement ouverte, elle permet une communication non restreinte entre la voie d'entrée 12 et la voie de sortie 14 en particulier, s'agissant d'un limiteur de pression, pour limiter la pression du fluide en entrée en évacuant le volume de fluide en excès à la voie d'entrée 12 vers la voie de sortie 14. S'il est nécessaire de fermer rapidement la valve, en particulier en raison d'une diminution de la pression à la voie d'entrée 12, ceci est rendu possible grâce au fait que la chambre d'amortissement 30 est alimentée sans restriction, ce qui sollicite un déplacement du piston dans le sens opposé au sens F, le ressort 26 repoussant quant à lui la tige de soupape dans le même sens, tandis que, la pression ayant diminué à la voie d'entrée 12 par rapport au tarage de la valve, les chambres de commande 24 et 28 n'empêchent pas ce déplacement.

On voit sur la figure 2 que le ressort 26 porte une cale de rappel 46 qui est en appui contre la tête de la tige de soupape.

En l'espèce, cette tête est convexe, tandis que la cale de rappel 46 présente un renfoncement de calage 46A pour cette tête, ce qui permet un centrage entre le ressort et la tige de soupape, lors du déplacement de cette dernière. Le tarage du ressort peut être modifié par une vis de réglage 48, déplaçable dans un bouchon 50 du corps de valve et coopérant avec l'extrémité du ressort opposée à la cale 46.

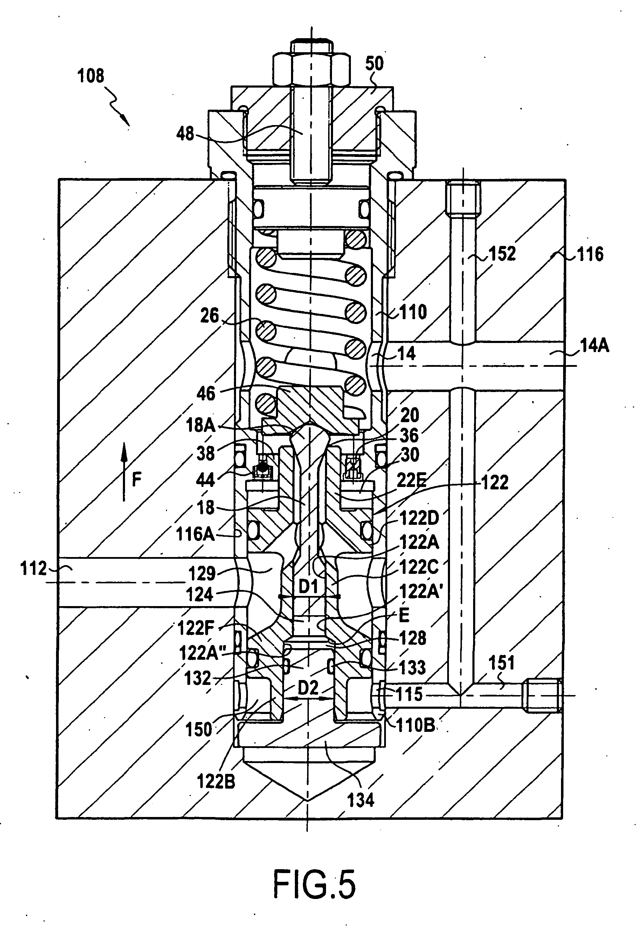

On décrit maintenant la figure 5, sur laquelle les éléments inchangés par rapport aux figures 2 à 4 sont désignés par les mêmes références numériques.

Les modifications apportées par rapport à la valve décrite sur les figures précédentes se rapportent en particulier à la chambre de commande de fermeture pour le piston. Ce piston 122 est donc légèrement modifié, de même que le corps de valve 110.

On voit que l'alésage 122A du piston 122 est étagé et présente une partie 122A' de plus petit diamètre D1 et une partie 122A" de plus grand diamètre D2. La chambre de commande d'ouverture 124 pour la tige de soupape est formée dans la partie de plus petit diamètre 122A', dans laquelle coulisse la tige de soupape. La chambre de commande de fermeture 128 pour le piston est quant à elle formée dans la partie de plus grand diamètre.

Plus précisément, on voit que les parties 122A' et 122A" sont séparées par un épaulement E de l'alésage 122A. Lorsque du fluide est présent dans l'espace formé par les chambres 124 et 128, la pression de fluide agit sur la section de l'extrémité 18C de la tige de soupape pour tendre à déplacer cette dernière dans le sens F de son ouverture, et la pression de fluide agit sur la section de l'épaulement E, mesurée perpendiculairement au sens de déplacement F, pour tendre à déplacer ce piston dans le sens F de sa fermeture et amener ainsi le siège de soupape 20 formé à l'extrémité du piston 122 opposée aux chambres 124 et 128 à rattraper la tête 18A de la tige de soupape 18.

Avantageusement, les deux sections précitées sont égales ou sensiblement égales, ce qui permet d'obtenir un effort de rappel du piston vers sa position de repos qui soit optimum, même dans des conditions particulières d'utilisation de la valve, par exemple lorsque cette valve est un limiteur de pression du circuit d'alimentation d'un moteur de tourelle équipant une machine qui est en dévers.

L'alésage 122A du piston 122 est traversant mais un téton de guidage 132, par rapport auquel le piston 122 est apte à coulisser, est inséré dans l'alésage 122A, à l'extrémité de ce dernier opposée à la tige de soupape 18. En d'autres termes, le téton 132 est inséré dans l'extrémité de l'alésage situé dans la queue 122B du piston 122. On voit qu'un joint d'étanchéité 133 est disposé entre le téton de guidage 132 et la paroi de l'alésage 122A. Ainsi, l'extrémité libre du téton 132 ferme la chambre de commande de fermeture 128 du côté opposé à la tige de soupape.

On voit que le téton 132 est porté par un élément porteur 134 qui est disposé au fond de l'alésage 116A de la pièce 116 dans laquelle est disposée la valve, étant rappelé que cette pièce est par exemple une partie de carter d'un moteur hydraulique. Cette pièce 134 a en l'espèce la forme d'un disque, de sorte que l'ensemble monobloc formé par le téton 132 et la pièce 134 a, en section, une forme en T.

En l'espèce, la pièce 134 est simplement coincée entre un épaulement du fond de l'alésage 116A et l'extrémité libre 110B du corps 110, ce dernier étant vissé dans l'alésage 116A. Avantageusement, un léger jeu est ménagé au montage de la pièce 134 dans le fond de l'alésage, pour permettre la fixation en butée du corps de valve 110 sur la pièce 116. En tout état de cause, du point de vue du fonctionnement de la valve, le téton 132 est fixe par rapport au corps de valve 110.

La voie d'entrée 112 débouche dans un espace 129 ménagé à l'intérieur du corps de valve. Des fenêtres 34 du piston 122, analogues à celles du piston 22 sont disposées entre l'alésage 122A et la partie périphérique 122C du piston situé dans l'espace 129. Comme sur les figures précédentes, un jeu ménagé entre la portée axiale 18C de la tige de guidage et une portion de guidage de l'alésage (formant la paroi de la chambre de commande d'ouverture 124 ou située dans sa continuité) permet l'alimentation de la chambre d'ouverture 124. En l'espèce, dans la mesure où la chambre de commande de fermeture 128 pour le piston est située dans le même alésage 122 que la chambre 124, ce jeu permet également l'alimentation de la chambre de commande de fermeture. En l'espèce, l'espace 129 qui est annulaire, est ménagé entre la paroi interne du corps 110 et la partie 122C du piston, qui est une partie axiale de diamètre réduit.

On voit qu'un autre espace annulaire 150 est ménagé autour du piston 122 en étant délimité par ce piston et par l'élément porteur 134. Plus précisément, l'espace annulaire 150 est délimité autour de la queue 122B du piston qui est une partie axiale présentant un diamètre réduit, et qui est séparé de la partie 122C précitée par une portion plus large 122F qui, comme la partie 122D (laquelle est analogue à la partie 22D du piston des figures précédentes) coopère à étanchéité avec la paroi intérieure du corps 110. Ainsi, les espaces 129 et 150 sont isolés l'un de l'autre.

L'espace 150 est relié à la voie de sortie 14 de la valve. On voit en effet que la pièce 116 dans laquelle est disposé le corps de valve présente des perçages 151 et 152 qui relient le perçage 14A à une voie 115 du corps de valve. On fait ainsi en sorte que la chambre formée par l'espace annulaire 150 soit à la même pression que la chambre dans laquelle est disposé le ressort 26. En variante, la liaison de l'espace 150 avec la sortie 14 peut être réalisée par un conduit ménagé dans la paroi du corps 110 lorsque l'épaisseur de cette paroi le permet.

Dans la variante de la figure 5, la communication entre les chambres d'ouverture et de fermeture est plus directe que sur les figures précédentes, puisque ces chambres sont en fait deux portions dans le même alésage.

## Revendications

1. Valve à ouverture amortie, comprenant un corps de valve (10 ; 110), avec une voie d'entrée (12, 112) et une voie de sortie (14), une tige de soupape (18) apte à se déplacer entre une position fermée dans laquelle ladite tige coopère avec un siège de soupape (20) pour isoler les voies d'entrée et de sortie et une position ouverte dans laquelle la tige est écartée du siège pour mettre les voies d'entrée et de sortie (12, 112, 14) en communication, la valve comprenant une chambre de commande d'ouverture (24 ; 124) pour la tige de soupape apte à être alimentée en fluide pour solliciter la tige de soupape vers sa position ouverte, un ressort de rappel (26) pour solliciter la tige de soupape vers sa position fermée, un piston (22 ; 122) apte à coulisser dans le corps (10 ; 110) selon un déplacement de fermeture pour solliciter un contact entre la tige de soupape (18) et le siège (20), et des moyens (28, 30 ; 128, 130) de commande hydraulique du déplacement du piston comprenant un dispositif de limitation du débit (36) pour différer le déplacement de fermeture du piston (22 ; 122) par rapport au déplacement de la tige de soupape (18) vers sa position ouverte, le siège de soupape (20) étant formé sur le piston (22 ; 122) et ce dernier présentant un alésage (22A ; 122A) dans lequel est disposée coulissante la tige de soupape (18),
**caractérisée en ce que** les moyens de commande hydraulique du déplacement du piston (22 ; 122) comprennent une chambre d'amortissement (30) disposée de telle sorte que du fluide doit s'évacuer hors de ladite chambre d'amortissement pour permettre un déplacement de fermeture du piston, cette évacuation étant opérée par l'intermédiaire du dispositif de limitation du débit (36) qui est disposé entre la chambre d'amortissement et la voie de sortie (14).

2. Valve selon la revendication 1, **caractérisée en ce que** la chambre de commande d'ouverture (24; 124) pour la tige de soupape (18) est ménagée dans le piston (22 ; 122) et **en ce que** les moyens de commande hydraulique du déplacement du piston comprennent une chambre de commande de fermeture (28 ; 128) pour le piston (22 ; 122) qui communique avec ladite chambre de commande d'ouverture (24 ; 124) pour la tige de soupape par l'intérieur de la valve.

3. Valve selon la revendication 1 ou 2, **caractérisée en ce que** le piston (22 ; 122) présente au moins une fenêtre (34) disposée entre l'alésage (22A ; 122A) et une partie périphérique (22C ; 122C) du piston (22 ; 122) qui est située dans un espace (28 ; 128) communiquant avec la voie d'entrée (12, 112), et **en ce que** la tige de soupape (18) présente une portée axiale (18C) apte à coopérer avec une portion de guidage de l'alésage (22A ; 122A) située entre la chambre de commande d'ouverture (24 ; 124) pour la tige de soupape et ladite fenêtre (34), un jeu (j) ménagé entre ladite portée axiale (18C) et ladite portion de guidage permettant la communication entre la chambre de commande d'ouverture (24 ; 124) pour la tige de soupape (18) et ledit espace.

4. Valve selon les revendications 2 et 3, **caractérisée en ce que** ledit espace comprend la chambre de commande de fermeture (28) pour le piston (22).

5. Valve selon la revendication 2 ou 3, **caractérisée en ce que** l'alésage (122A) du piston (122) est étagé et présente une partie (122A') de plus petit diamètre, dans laquelle la tige de soupape (18) coulisse et dans laquelle est formée la chambre de commande d'ouverture (124) pour ladite tige, ainsi qu'une partie de plus grand diamètre (122A"), éloignée de la tige de soupape et dans laquelle la chambre de commande de fermeture pour le piston est formée.

6. Valve selon la revendication 5, **caractérisée en ce qu'**un téton de guidage (132) par rapport auquel le piston (122) est apte à coulisser, est inséré dans l'alésage du piston, à l'extrémité de ce dernier opposée à la tige de soupape.

7. Valve selon les revendications 3 et 6, **caractérisée en ce qu'**un joint d'étanchéité (133) est disposé entre le téton de guidage (132) et la paroi de l'alésage.

8. Valve selon la revendication 6 ou 7, **caractérisée en ce qu'**un espace annulaire (150) est ménagé autour du piston (122) en étant délimité par le piston et un élément porteur (134) du téton de guidage, cet espace annuaire étant relié à la voie de sortie.

9. Valve selon l'une quelconque des revendications 1 à 8, **caractérisée en ce que** la chambre de commande d'ouverture (24 ; 124) pour la tige de soupape (18) communique avec la voie d'entrée (12, 112).

10. Valve selon l'une quelconque des revendications 1 à 9, **caractérisée en ce que** corps de valve (10 ; 110) présente une paroi annulaire interne (38) ayant un perçage (40), **en ce que** le piston (22 ; 122) présente une extension axiale (22E), qui porte le siège de soupape (20) et qui est engagée dans ledit perçage, et une portion de contact (22D ; 122D) qui coopère avec la périphérie interne du corps de valve (10 ; 110) d'un côté de ladite paroi annulaire interne opposé à la voie de sortie (14), et **en ce que** la chambre d'amortissement (30) est ménagée entre ladite paroi annulaire interne (38) et ladite portion de contact (22D ; 122D) du piston (22 ; 122).

11. Valve selon la revendication 10, **caractérisée en ce que** le dispositif de limitation du débit (36) est disposé dans la paroi annulaire interne (38).

12. Valve selon la revendication 10 ou 11, **caractérisée en ce qu'**elle comporte un clapet anti-retour (44) autorisant une circulation de fluide sensiblement non restreinte entre la voie de sortie (14) et la chambre d'amortissement (30) dans le sens de l'alimentation en fluide de ladite chambre.

13. Valve selon la revendication 12, **caractérisée en ce que** le clapet anti-retour (44) est disposé dans la paroi annulaire interne (38).

14. Valve selon l'une quelconque des revendications 1 à 13, **caractérisée en ce que** le ressort (26) porte une cale de rappel (46) qui est en appui contre la tête (18A) de la tige de soupape (18).

15. Valve selon la revendication 14, **caractérisée en ce que** la tête (18A) de la tige de soupape (18) est convexe, tandis que la cale de rappel (46) présente un renfoncement de calage pour ladite tête.

## Claims

1. A valve having damped opening, said valve comprising a valve body (10; 110) having an inlet port (12, 112) and an outlet port (14), a valve stem (18) suitable for moving between a closed position in which said stem co-operates with a valve seat (20) so as to isolate the inlet port and the outlet port from each other, and an open position in which the stem is spaced apart from the seat so as to put the inlet and the outlet ports (12, 112, 14) into communication with each other, the valve further comprising an opening control chamber (24; 124) for the valve stem, which chamber is suitable for being fed with fluid so as to urge the valve stem to move towards its open position, a return spring (26) for urging the valve stem to move towards its closed position, a piston (22; 122) suitable for sliding in the body (10; 110) in a closure movement for urging contact to be established between the valve stem (18) and the seat (20), and hydraulic control means (28, 30; 128, 130) for causing the piston to move, which control means include a flow-rate limiter device (36) for deferring the closure movement of the piston (22; 122) relative to the movement of the valve stem (18) towards its open position, the valve seat (20) being formed on the piston (22; 122) and said piston being provided with a bore (22A; 122A) in which the valve stem (18) is slidably disposed;
said valve being **characterized in that** the hydraulic control means for causing the piston (22; 122) to move include a damping chamber (30) disposed in a manner such that fluid must flow out of said damping chamber in order to enable the piston to move in its closure movement, the fluid flowing out via the flow-rate limiter device (36) that is disposed between the damping chamber and the outlet port (14).

2. A valve according to claim 1, **characterized in that** the opening control chamber (24; 124) for the valve stem (18) is provided in the piston (22; 122), and **in that** the hydraulic control means for causing the piston to move include a closure control chamber (28; 128) for the piston (22; 122), which chamber communicates with said opening control chamber (24; 124) for the valve stem via the inside of the valve.

3. A valve according to claim 1 or claim 2, **characterized in that** the piston (22; 122) has at least one window (34) disposed between the bore (22A; 122A) and a peripheral portion (22C; 122C) of the piston (22; 122) that is situated in a space (28; 128) communicating with the inlet port (12, 112), and **in that** the valve stem (18) has an axial bearing surface (18C) that is suitable for co-operating with a guide portion of the bore (22A; 122A) that is situated between the opening control chamber (24; 124) for the valve stem and said window (34), clearance (j) provided between said axial bearing surface (18C) and said guide portion making it possible for communication to be established between said space and the opening control chamber (24; 124) for the valve stem (18).

4. A valve according to claims 2 and 3, **characterized in that** said space comprises the closure control chamber (28) for the piston (22).

5. A valve according to claim 2 or claim 3, **characterized in that** the bore (122A) of the piston (122) is stepped and has a smaller-diameter portion (122A'), in which the valve stem (18) is slidably received and in which the opening control chamber (124) for said stem is formed, and a larger-diameter portion (122A") remote from the valve stem and in which said closure control chamber for the piston is formed.

6. A valve according to claim 5, **characterized in that** a guide stud (132) relative to which the piston (122) is suitable for sliding, is inserted into the bore of the piston, at that end of said piston that is remote from the valve stem.

7. A valve according to claims 3 and 6, **characterized in that** a sealing gasket (133) is disposed between the guide stud (132) and the wall of the bore.

8. A valve according to claim 6 or claim 7, **characterized in that** an annular space (150) is provided around the piston (122) by being defined by the piston and by a carrier element (134) carrying the guide stud, said annular space being connected to the outlet port.

9. A valve according to any one of claims 1 to 8, **characterized in that** the opening control chamber (24; 124) for the valve stem (18) communicates with the inlet port (12, 112).

10. A valve according to any one of claims 1 to 9, **characterized in that** the valve body (10, 110) is provided with an internal annular wall (38) having a hole (40), **in that** the piston (22; 122) is provided with an axial extension (22E) that carries the valve seat (20) and that is engaged in said hole, and a contact portion (22D; 122D) that co-operates with the inside periphery of the valve body (10; 110) on that side of the internal annular wall that is remote from the outlet port (14), and **in that** the damping chamber (30) is provided between said internal annular wall (38) and said contact portion (22D; 122D) of the piston (22; 122).

11. A valve according to claim 10, **characterized in that** the flow-rate limiter device (36) is disposed in the internal annular wall (38).

12. A valve according to claim 10 or claim 11, **characterized in that** it is provided with a check valve (44) allowing fluid to flow in substantially non-constricted manner from the outlet port (14) to the damping chamber (30) in the direction in which said chamber is fed with fluid.

13. A valve according to claim 12, **characterized in that** the check valve (44) is disposed in the internal annular wall (38).

14. A valve according to any one of claims 1 to 13, **characterized in that** the spring (26) carries a return block (46) that is in abutment against the head (18A) of the valve stem (18).

15. A valve according to claim 14, **characterized in that** the head (18A) of the valve stem (18) is convex, while the return block (46) is provided with a blocking recess for said head.

## Patentansprüche

1. Ventil mit gedämpftem Öffnen, umfassend einen Ventilkörper (10; 110) mit einem Einlaßweg (12, 112) und einem Auslaßweg (14), eine Ventilstange (18), die geeignet ist, sich zwischen einer geschlossenen Stellung, in der die Stange mit einem Ventilsitz (20) zusammenwirkt, um den Einlaß- und den Auslaßweg zu trennen, und einer geöffneten Stellung zu bewegen, in der die Stange von dem Sitz entfernt ist, um den Einlaß- und den Auslaßweg (12, 112, 14) miteinander zu verbinden, wobei das Ventil folgendes umfaßt, nämlich eine Öffnungssteuerungskammer (24; 124) für die Ventilstange, die geeignet ist, mit Fluid beaufschlagt zu werden, um die Ventilstange in ihre geöffnete Stellung zu belasten, eine Rückstellfeder (26), um die Ventilstange in ihre geschlossene Stellung zu belasten, einen Kolben (22; 122), der geeignet ist, sich in dem Körper (10; 110) in einer Schließbewegung verschieben zu lassen, um einen Kontakt zwischen der Ventilstange (18) und dem Sitz (20) zu bewirken, sowie Mittel (28, 30; 128, 130) zur hydraulischen Steuerung der Bewegung des Kolbens, mit einer Durchflußbegrenzungsvorrichtung (36), um die Schließbewegung des Kolbens (22; 122) gegenüber der Bewegung der Ventilstange (18) in ihre geöffnete Stellung zu verzögern, wobei der Ventilsitz (20) an dem Kolben (22; 122) ausgebildet ist und letzterer eine Bohrung (22A; 122A) aufweist, in der die Ventilstange (18) verschieblich angeordnet ist, **dadurch gekennzeichnet, daß** die Mittel zur hydraulischen Steuerung der Bewegung des Kolbens (22; 122) eine Dämpfungskammer (30) umfassen, die derart angeordnet ist, daß Fluid aus der Dämpfungskammer entweichen muß, um eine Schließbewegung des Kolbens zu ermöglichen, wobei dieses Entweichen mittels der Durchflußbegrenzungsvorrichtung (36) bewirkt wird, die zwischen der Dämpfungskammer und dem Auslaßweg (14) angeordnet ist.

2. Ventil nach Anspruch 1, **dadurch gekennzeichnet, daß** die Öffnungssteuerungskammer (24; 124) für die Ventilstange (18) in dem Kolben (22; 122) ausgebildet ist, und daß die Mittel zur hydraulischen Steuerung der Bewegung des Kolbens eine Schließsteuerungskammer (28; 128) für den Kolben (22; 122) umfassen, die mit der Öffnungssteuerungskammer (24; 124) für die Ventilstange über den Innenraum des Ventils in Verbindung steht.

3. Ventil nach Anspruch 1 oder 2, **dadurch gekennzeichnet, daß** der Kolben (22; 122) wenigstens ein Fenster (34) aufweist, das zwischen der Bohrung (22A; 122A) und einem Umfangsteil (22C; 122C) des Kolbens (22; 122), das sich in einem mit dem Einlaßweg (12, 112) verbundenen Raum (28; 128) befindet, angeordnet ist, und daß die Ventilstange (18) einen axialen Ansatz (18C) aufweist, der geeignet ist, mit einem zwischen der Öffnungssteuerungskammer (24; 124) für die Ventilstange und dem Fenster (34) befindlichen Führungsabschnitt der Bohrung (22A; 122A) zusammenzuwirken, wobei ein zwischen dem axialen Ansatz (18C) und dem Führungsabschnitt ausgespartes Spiel (j) die Verbindung zwischen der Öffnungssteuerungskammer (24; 124) für die Ventilstange (18) und dem Raum ermöglicht.

4. Ventil nach den Ansprüchen 2 und 3, **dadurch gekennzeichnet, daß** der Raum die Schließsteuerungskammer (28) für den Kolben (22) umfaßt.

5. Ventil nach Anspruch 2 oder 3, **dadurch gekennzeichnet, daß** die Bohrung (122A) des Kolbens (122) gestuft ist und einen Teil (122A') mit kleinerem Durchmesser aufweist, in dem die Ventilstange (18) gleitet und in dem die Öffnungssteuerungskammer (124) für die Stange ausgebildet ist, sowie einen Teil mit größerem Durchmesser (122A"), der von der Ventilstange entfernt ist und in dem die Schließsteuerungskammer für den Kolben ausgebildet ist.

6. Ventil nach Anspruch 5, **dadurch gekennzeichnet, daß** ein Führungszapfen (132), dem gegenüber der Kolben (122) verschieblich ist, in die Bohrung des Kolbens an dessen der Ventilstange gegenüberliegenden Ende eingesetzt ist.

7. Ventil nach den Ansprüchen 3 und 6, **dadurch gekennzeichnet, daß** eine Dichtung (133) zwischen dem Führungszapfen (132) und der Wand der Bohrung angeordnet ist.

8. Ventil nach Anspruch 6 oder 7, **dadurch gekennzeichnet, daß** ein ringförmiger Raum (150) um den Kolben (122) herum ausgebildet ist und dabei durch den Kolben und ein Tragelement (134) des Führungszapfens begrenzt ist, wobei dieser ringförmige Raum mit dem Auslaßweg verbunden ist.

9. Ventil nach einem der Ansprüche 1 bis 8, **dadurch gekennzeichnet, daß** die Öffnungssteuerungskammer (24; 124) für die Ventilstange (18) mit dem Einlaßweg (12, 112) in Verbindung steht.

10. Ventil nach einem der Ansprüche 1 bis 9, **dadurch gekennzeichnet, daß** der Ventilkörper (10; 110) eine ringförmige Innenwand (38) mit einer Bohrung (40) aufweist, daß der Kolben (22; 122) eine axiale Erweiterung (22E), die den Ventilsitz (20) trägt und die in die Bohrung eingesteckt ist, sowie einen Kontaktabschnitt (22D; 122D) aufweist, der mit dem Innenumfang des Ventilkörpers (10; 110) auf einer dem Auslaßweg (14) gegenüberliegenden Seite der ringförmigen Innenwand zusammenwirkt, und daß die Dämpfungskammer (30) zwischen der ringförmigen Innenwand (38) und dem Kontaktabschnitt (22D; 122D) des Kolbens (22; 122) ausgebildet ist.

11. Ventil nach Anspruch 10, **dadurch gekennzeichnet, daß** die Durchflußbegrenzungsvorrichtung (36) in der ringförmigen Innenwand (38) angeordnet ist.

12. Ventil nach Anspruch 10 oder 11, **dadurch gekennzeichnet, daß** es ein Rückschlagventil (44) umfaßt, das eine im wesentlichen unbegrenzte Fluidzirkulation zwischen dem Auslaßweg (14) und der Dämpfungskammer (30) in Richtung der Fluidbeaufschlagung der Kammer zuläßt.

13. Ventil nach Anspruch 12, **dadurch gekennzeichnet, daß** das Rückschlagventil (44) in der ringförmigen Innenwand (38) angeordnet ist.

14. Ventil nach einem der Ansprüche 1 bis 13, **dadurch gekennzeichnet, daß** die Feder (26) einen Rückstellkeil (46) trägt, der an dem Kopf (18A) der Ventilstange (18) in Anlage ist.

15. Ventil nach Anspruch 14, **dadurch gekennzeichnet, daß** der Kopf (18A) der Ventilstange (18) konvex ist, während der Rückstellkeil (46) eine Vertiefung zum Verkeilen für den Kopf aufweist.
